# EUROPÄISCHE PATENTSCHRIFT

(11) **EP 0 406 910 B1**
(45) Veröffentlichungstag und Bekanntmachung des Hinweises auf die Patenterteilung: **16.03.1994**
(21) Anmeldenummer: 90113018.7
(22) Anmeldetag: 07.07.1990
(51) Int. Cl.: H01M 4/02, H01M 4/68

(54) **Elektroden für galvanische Primär- und Sekundärelemente**
Electrodes for galvanic primary and secondary cells
Electrodes pour éléments galvaniques primaires et secondaires

(30) Priorität: 07.07.1989 DE 3922425
(43) Veröffentlichungstag der Anmeldung: 09.01.1991
(73) Patentinhaber: HOECHST AKTIENGESELLSCHAFT, 65926 Frankfurt am Main (DE); HAGEN BATTERIE AG, D-59494 Soest (DE)
(72) Erfinder: Disselbeck, Dieter, D-6232 Bad Soden am Taunus (DE); Berger, Karl Christof, D-4772 Bad Sassendorf (DE); Drews, Jürgen, Dr., D-4770 Soest (DE)

(56) Entgegenhaltungen:
- EP-A- 0 158 234
- DE-A- 2 226 972
- DE-A- 2 533 408
- DE-C- 1 771 822
- GB-A- 1 314 891

## Beschreibung

Die Elektroden galvanischer Elemente, insbesondere elektrochemischer Speicher, bestehen aus einer positiven bzw. negativen aktiven Masse und einem diese Masse tragenden Material. Übliche Trägermaterialien bei Akkumulatoren sind metallische Gitter unterschiedlicher Ausbildung. Bei neueren Entwicklungen kann zum Beispiel ein Hartbleigitter durch ein verbleites Gitter aus Kupfer ersetzt werden. Durch diese und ähnliche Maßnahmen, wie beispielsweise auch die Einlagerung von leitfähigen Fasern in der aktiven Masse, können Fortschritte hinsichtlich des Leistungsgewichts erzielt werden, doch bleibt nach wie vor der Wunsch offen, die Leistungscharakteristik galvanischer Primär- und Sekundärelemente weiter zu verbessern. Es ist eine Aufgabe der Erfindung, leistungsgesteigerte galvanische Elemente, insbesondere Sekundärelemente mit geringerem Gewicht zur Verfügung zu stellen.

Erfindungsgemäß wird diese Aufgabe dadurch gelöst, daß die Elektroden der galvanischen Primär- und Sekundärelemente, bestehend aus einem Träger und einer aktiven Masse, einen Träger aus einem elektrisch leitfähigen Netzwerkstoff (3) aufweisen, der aus metallisierten Kunststoffäden besteht, und zur Bildung einer dreidimensionalen Struktur mit, vorzugsweise durch Tiefziehen erzeugten, über seine Fläche verteilten buckelartigen Vertiefungen und/oder Erhöhungen (5) versehen ist, in deren Bereich der Abstand zwischen den Kunststoffäden vergrößert ist, und der die aktive Masse skelettartig durchsetzt.

Das Adjektiv "Verformt" im Sinne dieser Erfindung beschreibt die dreidimensionale geometrische Form des Netzwerkstoffs. Es bedeutet nicht, daß das Material durch einen Verformungsprozeß hergestellt worden sein muß.

Ein Netzwerkstoff, der jedoch elektrisch nicht leitfähig ist, von seiner Geometrie her jedoch dem in den erfindungsgemäßen Elektroden enthaltenen Netzwerkstoff entspricht, ist aus der EP-A-15 82 34 bekannt. Sein wesentliches Merkmal ist ein räumliches Netzwerk mit Stäbchen, Knotenpunkten und Hohlräumen, so daß er für andere Stoffe, wie z. B. die aktive Elektrodenmasse durchdringbar ist. Die elektrische Leitfähigkeit des erfindungsgemäß eingesetzten Netzwerkstoffs kann durch chemo-galvanische Metallisierung, durch die Einarbeitung von Metallfäden in die textile Basisfläche oder aber durch Zugabe von Metallflocken oder anderen elektrisch leitenden Füllstoffen zu dem im Netzwerkstoff ggf. enthaltenen und diesen stabilisierenden Harz erzielt werden.

Die offenen Maschen der filigranartigen Netzstruktur des erfindungsgemäßen elektrisch leitfähigen Netzwerkstoffs sind ein charakteristisches geometrisches Merkmal dieses Materials. Sie werden beispielsweise von den durch Tiefziehen gedehnten Maschen eines flächenförmigen Textilmaterials, wie z.B. eines durch dehnbare Schußfäden fixierten Kreuzgeleges, einer Raschelware oder eines Gewebes, insbesondere aber einer Maschenware gebildet. Wird als Basismaterial für den erfindungsgemäßen Netzwerkstoff ein Kreuzgelege, in dem die Filamentbündel sich etwa in Winkeln von 5 bis 30° kreuzen, oder ein Gewebe eingesetzt, so ist es erforderlich, daß das flächenförmige Textilmaterial aus Fasern besteht, oder zumindest solche in einem wirksamen Anteil enthält, die selbst eine relativ hohe Dehnfähigkeit aufweisen, die reversibel oder nichtreversibel sein kann, damit die ausreichende Tiefziehfähigkeit des Materials gegeben ist. Ein Fasermaterial mit hoher nichtreversibler Dehnfähigkeit besteht z.B. aus teilorientierten Filamenten, welche durch Ausspinnen mit rel. hoher Spinnabzugsgeschwindigkeit hergestellt werden. Weitgehend unabhängig von der Dehnfähigkeit des Fasermaterials dagegen ist die Tiefziehfähigkeit von Maschenware. Es ist daher bevorzugt, als Basis für die Herstellung der erfindungsgemäßen elektrisch leitfähigen Netzwerkstoffe, eine Maschenware einzusetzen. Das Fasermaterial der flächenförmigen Textilmaterialien ist im Prinzip von untergeordneter Bedeutung. Man wird es jedoch so auswählen, daß es dem vorgesehenen Einsatzzweck in optimaler Weise zu genügen verspricht. Während die physikalischen Eigenschaften von Naturfasern nur im begrenzten Rahmen zu beeinflussen sind, können die physikalischen Eigenschaften von Synthesefasern optimal dem gewünschten Einsatzzweck angepaßt werden. Es ist daher besonders bevorzugt, zur Herstellung der erfindungsgemäßen, elektrisch leitfähigen Netzwerkstoffe, von Synthesefasermaterialien, wie z.B. Polyamiden, Polyacrylnitril, Polyolefinfasern, insbesondere aber von Polyestermaterialien auszugehen. Besonders bevorzugt sind hier wiederum solche Typen, die eine besonders hohe mechanische Festigkeit aufweisen. Ein Beispiele für derartige Fasermaterialien sind das Handelsprodukt ^{(R)}TREVIRA hochfest oder auch endgruppenverschlossene Polyestermaterialien, die besonders widerstandsfähig sind gegen chemische Einflüsse. Die dreidimensional verformten, elektrisch leitfähigen Netzwerkstoffe sind vorzugsweise, und insbesondere wenn sie aus einem Fasermaterial mit reversibler Dehnbarkeit bestehen, durch eine Harzimprägnierung des Textilmaterials mit einem thermoplastischen oder duroplastischen Harz formstabilisiert.
Bei Einsatz eines relativ niedrig erweichenden, teilorientierten Fasermaterials kann auf eine gesonderte Harzimprägnierung verzichtet werden, weil das thermoplastische Filamentmaterial selbst die Funktion eines thermoplastischen Harzes übernimmt. Demgemäß ist unter Formstabilisierung durch einen Thermoplasten im Sinne diser Erfindung auch die Formstabilisierung zu verstehen, die durch das Erweichen der thermoplastischen Filamente des verformten flächenförmigen Textilmaterials erfolgt.

Bei Einsatz eines reversibel verformbaren Fasermaterials zur Herstellung des Netzwerkstoffs durch Tiefziehen oder bei der Herstellung des Netzwerkstoffs durch andere Verfahren als Tiefziehen, z.B. durch spezielle Webverfahren, kann eine Beharzung mit einem thermoplastischen oder duroplastischen Harz ebenfalls unterbleiben, da durch die anschließende Metallisierung eine Stabilisierung der Netzwerkstruktur erfolgt.

Die in den Netzwerkstoff ggf. enthaltenen formstabilisierenden Harze, können den verschiedenen bekannten thermoplastischen oder duroplastischen Harzgruppen entstammen, sofern ihre mechanischen Eigenschaften die Formstabilisierung der erfindungsgemäßen Netzwerkstoffe zulassen. Beispiele für geeignete thermoplastische Harze sind Polyacrylate oder Polyvinylchlorid; bevorzugte Harze sind jedoch Duroplaste, wie z.B. Melamin- und insbesondere Phenolharze.

Die in den dreidimensional verformten, Netzwerkstoffen enthaltene Harzmenge ist auf das Gewicht des Textilmaterials so abgestimmt, daß sich beim Tiefziehen des flächenförmigen Textilmaterials die Maschen zu einem filigranen Netzwerk öffnen. Geeignete Auflagenmengen liegen im Bereich von 50 bis 500, vorzugsweise 100 bis 300 g Harz/m² des unverstreckten Textilmaterials. Innerhalb dieser angegebenen Bereiche wird die Harzmenge noch zweckmäßig an das Quadratmetergewicht des tiefziehfähigen Textilmaterials angepaßt. So wird man bei Einsatz eines schweren Textilmaterials innerhalb der oberen Hälfte der angegebenen Bereiche arbeiten, bei leichten Textilmaterialien in der unteren Hälfte. Das ausschlaggebende Kriterium ist, wie oben angegeben, die Bedingung, daß sich beim Tiefziehvorgang die Maschen des Textilmaterials zu einem Netzwerk öffnen.

Der erfindungsgemäße dreidimensional verformte Netzwerkstoff weist eine Vielzahl von Verformungen auf, die sich wenigstens in eine Richtung erstrecken, die eine Komponente senkrecht zur ursprünglichen Ebene des textilen Flächengebildes aufweist, aus dem der erfindungsgemäße Netzwerkstoff hergestellt wurde.

In einer besonders im Hinblick auf die weitere Verwendung als Skelettmaterial für die Herstellung von Elektroden spezifizierten Ausführungsform, weist der erfindungsgemäße Netzwerkstoff auf einer Basisfläche in regelmäßiger Anordnung eine Vielzahl von Erhebungen auf. In einer weiteren Ausführungsform weist der erfindungsgemäße Netzwerkstoff auf der Ebene der ursprünglichen Basisfläche in regelmäßiger Anordnung eine Vielzahl von Erhebungen und Vertiefungen auf. Die Erhebungen und Vertiefungen können die Form von Näpfchen mit runder oder eckiger Basisfläche oder z.B. die Form von Stegen haben. Die Erhebungen und Vertiefungen können aber je nach Einzelfall auch andere Formen haben, zum Beispiel die Form von Kegeln oder Kegelstümpfen, Pyramiden oder Pyramidenstümpfen mit unterschiedlich vieleckiger Basis, Zylinder, Prismen, sphärische Segmente usw. Besonders bevorzugt ist es auch, wenn die Scheitelpunkte bzw. -flächen der Erhebungen alle in einer Ebene und parallel zur Basisfläche liegen, was sinngemäß genauso für die Vertiefungen gilt.

Weiterhin ist es von Vorteil, wenn Zahl, Größe, Form und räumliche Anordnung der Verformungen pro Flächeneinheit des Flächengebildes so ausgewählt werden, daß das rechnerische Produkt aus der Größe der nach der Verformung verbliebenen Fläche der ursprünglichen Ebene und der Größe der Plateauflächen der Erhebungen oder das Produkt der Größe der Plateauflächen der Erhebungen und der Bodenflächen der Vertiefungen möglichst groß wird.

Weiter ist es von Vorteil, wenn Zahl, Größe, Form und räumliche Anordnung der Verformungen pro Flächeneinheit des Flächengebildes so ausgewählt werden, daß sie für die unterschiedliche Porosität oder sonstige Konsistenz der im Einzelfall zu Verwendung gelangenden aktiven Masse eine optimale Massehaftung bieten.

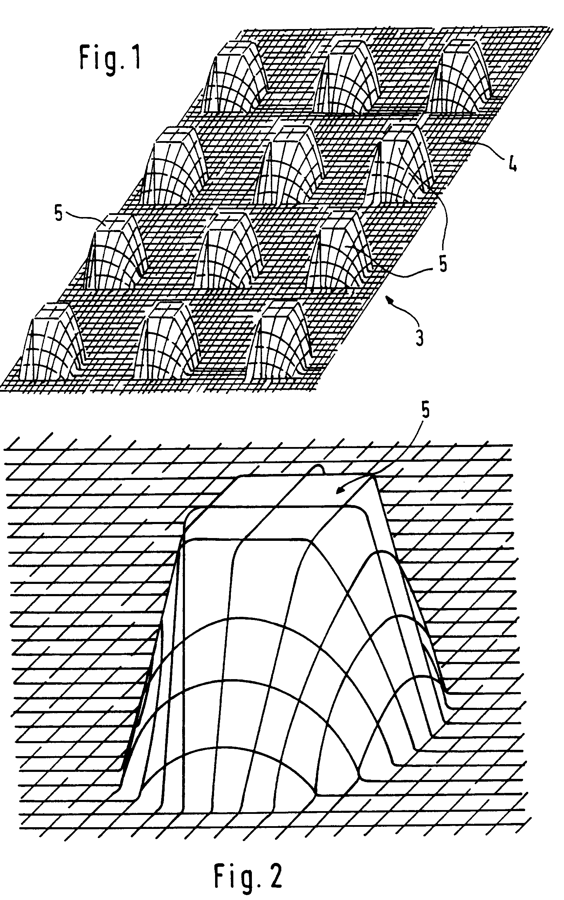

Die Figur 1 veranschaulicht schematisch einen Abschnitt eines Netzwerkstoffs, der auf einer Basisfläche (4) eine Vielzahl von hütchenförmigen Erhebungen (5) aufweist. Die Figur 2 zeigt in Vergrößerung die schematische Darstellung einer der hütchenförmigen Verformungen und veranschaulicht deutlich die im Bereich der Verformung auftretende drastische Erweiterung der Maschenstruktur des Textilmaterials.

Der erfindungsgemäß einzusetzende Netzwerkstoff kann selbstverständlich auch andere dreidimensionale Verformungen aufweisen. Es ist auch durchaus möglich, daß in dem erfindungsgemäßen dreidimensional verformten Netzwerkstoff die Fläche des ursprünglichen Textilmaterials überhaupt nicht mehr erhalten bleibt, wenn beispielsweise das Tiefziehen des Materials durch Stempel von beiden Seiten der Textilfläche her erfolgt, so daß in dem Material näpfchen- bzw. hütchenförmige Ausformungen abwechselnd nach oben und nach unten auftreten oder wenn die ursprüngliche Textilfläche durch eine Vielzahl schmaler, sich in der gleichen Längsrichtung erstreckenden Stempel von beiden Seiten zu einer Zickzackfläche ausgezogen und in dieser Form stabilisiert wird.

Das oben beschriebene Verfahren zur Herstellung des in den erfindungsgemäßen Elektroden enthaltenen Netzwerkstoffs durch Tiefziehen eines tiefziehfähigen, flächenförmigen Textilmaterials stellt eine besonders vorteilhafte Möglichkeit zur Ausführung der vorliegenden Erfindung dar.

Zur Herstellung des Netzwerkstoffs können aber selbstverständlich auch andere Formgebungs- Verfahren, wie z.B. spezielle Webverfahren eingesetzt werden, die geeignet sind, ein ggf. harzstabilisiertes Textilmaterial herzustellen, das, wie oben beschrieben, räumlich verformt ist und das die charakteristische offenmaschige Netzstruktur des durch Tiefziehen herstellbaren Netzwerkstoffs aufweist.

Die elektrische Leitfähigkeit des Netzwerkstoffs kann im Prinzip auf verschiedenen Wegen erzielt werden. So kann man bei der Herstellung des Netzwerkstoffs von flächenförmigen Textilmaterialien ausgehen, deren Fäden Metalldrähte aufweisen. Je nach gewünschter Leitfähigkeit können die zugrundeliegenden Fäden oder Garne bis zu 50 Gew.-%, vorzugsweise 1-10 Gew.-% flexible Metallfilamente wie z.B. feinste Kupferdrähte enthalten.

Eine weitere Möglichkeit, die elektrische Leitfähigkeit des Netzwerkstoffs zu erzielen besteht darin, das Stabilisierungsharz mit einem elektrisch leitfähigen Füllstoff, wie z.B. Metallpulver, Metallfasern oder auch z.B. Graphit zu versetzen. Der Anteil des elektrisch leitfähigen Füllstoffes zum Harz ist nach oben nur von der Bedingung begrenzt, daß das gefüllte Harz noch eine ausreichende Durchdringen der Textilfäden und Stabilisierung der Netzstruktur gewähren muß, sowie daß die Porosität der Netzstruktur erhalten bleibt.

Optimale Ergebnisse bezüglich der Leitfähigkeit werden durch eine Metallisierung der Oberfläche des Netzwerkstoffs erzielt. Netzwerkstoffe mit metallisierter Oberfläche sind daher vorzugsweise in den erfindungsgemäßen Elektroden enthalten.

Die elektrisch leitfähige Oberfläche des metallisierten Netzwerkstoffs besteht aus einem auf dem ggf. beharzten Textilmaterial fest haftenden dünnen Metallüberzug. Die Dicke des oberflächlichen Metallüberzugs beträgt 5 bis 300, vorzugsweise 20 bis 100 µm.

Insbesondere wird der metallische Überzug der erfindungsgemäßen Netzwerkstoffe von Metallen gebildet, die in der elektrochemischen Spannungsreihe, bezogen auf Wasserstoff, ein Normalpotential von -1,3 bis +1,6, vorzugsweise -0,8 bis +1,6 V aufweisen.

Der elektrisch leitfähige Metallüberzug des erfindungsgemäßen Netzwerkstoffs kann einschichtig oder mehrschichtig sein; so kann z.B. auf eine erste Metallschicht aus Kupfer eine sehr dünne Edelmetallschicht folgen oder es kann auf einer relativ dünnen Schicht aus Kupfer oder Nickel eine stärkere Schicht anderer Metalle, wie z.B. aus Silber, Blei, Zinn, Gold oder Platinmetallen folgen.

Der elektrisch leitende Metallüberzug des erfindungsgemäßen Netzwerkstoffs kann auch aus einer Mischung verschiedener Metalle, vorzugsweise solcher, die miteinander Legierungen bilden, bestehen.

Bevorzugt für die erste Schicht des metallischen Überzuges des erfindungsgemäßen Netzwerkstoffes der erfindungsgemäßen Elektroden sind insbesondere Kupfer, Nickel, Silber, Gold oder Platinmetalle, wobei insbesondere Gold oder die Platinmetalle auch als Deckschicht auf einer Grundschicht aus einem der vorher genannten Metalle, insbesondere aus Kupfer oder Nickel, angewendet werden können. Vorzugsweise findet sich dabei unmittelbar auf dem Polymermaterial des Netzwerkstoffs eine relativ dünne Metallschicht aus Gold Nickel und insbesondere aus Kupfer, auf der dann weitere stärkere Schichten eines oder mehrerer anderer Metalle folgen; bei Bleiakkumulatoren bestehen weitere Schichten vorzugsweise aus Blei, Zinn oder Blei/Zinn.

Eine Möglichkeit zur Herstellung des dreidimensional verformten elektrisch leitfähigen Netzwerkstoffs besteht darin, daß zunächst das flächenförmige, tiefziehfähige Textilmaterial, in dessen Fäden ggf. Metallfilamente enthalten sind, vorzugsweise die Maschenware, mit einem zur mechanischen Stabilisierung der Verformungen geeigneten obengenannten ggf. mit einem elektrisch leitfähigen Füller gefüllten Harz imprägniert wird. Die Applikation der Harze auf das Textilmaterial kann in üblicher Weise durch Aufstreichen, Bürsten, Rakeln, Pflatschen oder besonders vorteilhaft durch Tauchen erfolgen. Das mit Harz beaufschlagte Gewebe wird anschließend zweckmäßigerweise durch ein Quetschwalzenpaar auf die gewünschte Harzaufnahme abgequetscht.

Thermoplastische Harze werden für den Imprägniervorgang zweckmäßigerweise in Form von Lösungen oder vorzugsweise von Emulsionen aufgebracht. Hitzehärtbare Harze (Duroplaste) zweckmäßigerweise in der handelsüblichen Form als hochkonzentrierte wäßrige Lösungen oder Dispersionen.

Nach einer eventuellen Zwischentrocknung des harzimprägnierten Textilmaterials wird es dem Tiefziehprozeß bei erhöhter Temperatur unterworfen. Die Temperatur des Tiefziehens wird so gewählt, daß thermoplastische Harze aufgeschmolzen werden können und dabei die Fäden der Netzstruktur vollständig durchdringen. Das Gleiche gilt für Duroplaste; hier wird die Temperatur der Tiefzieheinrichtung so eingestellt, daß der Fließbereich des Duroplasts erreicht wird. Nach dem Schmelzen des Harzes wird die Temperatur der Tiefzieheinrichtung so geregelt, daß das Imprägnierharz erhärten kann. Bei Einsatz von Thermoplasten ist hierzu die Temperatur unter den Schmelzpunkt der Thermoplasten zu reduzieren; bei Duroplasten kann die Temperatur des Tiefziehgerätes in der Regel unverändert bleiben, weil die Aushärtung der Duroplasten auch bei erhöhter Temperatur erfolgt. Die Tiefzieheinrichtung wird so lange geschlossen gehalten, bis das stabilisierende Harz vollständig erhärtet ist und die durch Tiefziehen erreichte Struktur des Fasermaterials stabil bleibt.

Nach der Herstellung des dreidimensional verformten Netzwerkstoffs erfolgt dessen oberflächliche Metallisierung. Hierzu wird das Material in an sich bekannter Weise durch Aktivieren des Materials mit einer Edelmetallionen enthaltenden Lösung oder einem Edelmetallkolloid, gegebenenfalls eine anschließende sogenannte Beschleunigungsbehandlung in einer wäßrigen Säure wie z.B. Bor-Fluorwasserstoffsäure, Schwefel-, Salz- oder Oxalsäure für die eigentliche Metallisierung vorbereitet. Danach erfolgt die Abscheidung eines Metallüberzugs, wie z.B. eines Kupfer-, Nickel- oder Goldüberzugs auf dem in der oben genannten Weise vorbehandelten Netzwerkstoff. Die Metallabscheidung erfolgt durch Behandeln des vorbereiteten Netzwerkstoffs mit einer, die betreffenden Metallionen und ein Reduktionsmittel - in der Praxis wird meist Formaldehyd, ein Hypophosphit oder ein Alkaliboranat eingesetzt-enthaltenden wäßrigen Lösung.

Anschließend kann gewünschtenfalls auf der chemisch abgeschiedenen Metallschicht noch eine weitere Schicht des gleichen oder eines anderen Metalls in an sich bekannter Weise elektrolytisch abgeschieden werden.

In speziellen Fällen, z.B. wenn die Kunststoffoberfläche der Netzwerkfäden es verlangt oder besonders hohe Anforderungen an die Haftfestigkeit des Metallüberzugs gestellt werden, ist es zweckmäßig, den Netzwerkstoff vor dem Aktivieren durch Behandlung mit einem Quellmittel wie z.B. Aceton, Ethylacetat, Trichloraceton oder Trichloressigsäure und Beizen mit einer wäßrigen, üblicherweise 300 bis 900 g/l Chromsäure und gegebenenfalls Schwefelsäure enthaltenden Lösung, auf die Aktivierung vorzubereiten. Es ist besonders überraschend, daß in der Regel bei der Metallisierung der Netzwerkstoffe auf diese Quell- und Beizbehandlung verzichtet werden kann.

Vorzugsweise erfolgt vor der Aktivierung (Bekeimung) des Netzwerkstoffs eine gründliche Oberflächenreinigung. Diese kann z.B. durch eine Behandlung mit einer wäßrigen alkalischen Tensidlösung, z.B. mit einem handelsüblichen sogenannten Konditionierungsmittel, erfolgen. Als besonders zweckmäßig hat sich eine Reinigungsbehandlung in einem warmen (40 - 70°C) Wasserbad unter Einwirkung von Ultraschall erwiesen. Hierbei ist der Einsatz von entionisiertem Wasser besonders empfehlenswert.

Die Metallisierung des Netzwerkstoffs kann bis zu der gewünschten Stärke des Metallüberzugs ausschließlich durch die oben beschriebene chemische Metallabscheidung erfolgen. Dabei hängt die Stärke der Metallschicht naturgemäß von der Expositionszeit des Netzwerkstoffs in dem Metallisierungsbad ab. In der Regel können pro Stunde ca 2-6 µm Metallfilm abgeschieden werden.

Bevorzugt ist die chemische Erzeugung eines Metallfilms aus Kupfer oder Nickel in einer Stärke von 0,5 bis 2µm und anschließende elektrolytische Metallisierung z.B. mit Chrom, Kupfer, Nickel, Blei, Blei/Zinn, Zinn, Gold oder einem Platinmetall, vorzugsweise mit Kupfer, Nickel, Blei, Zinn einer Blei/Zinn-Mischung oder Gold bis zu einer Stärke des Metallüberzugs von bis zu 300, vorzugsweise 50 bis 100 µm.

Besonders bevorzugt ist bei der kombinierten chemischen und elektrolytischen Metallisierung die chemische Abscheidung eines Kupferfilms weil dieser sehr duktil ist und eine besonders leicht zu aktivierende Oberfläche hat.

Zur Herstellung der erfindungsgemäßen Elektroden wird die aktive Masse in das Skelett des Netzwerkstoffes eingebracht. Hierzu sind sämtliche mit einer pasten- bzw. salbenartigen Konsistenz herstellbare Massen geeignet. Insbesondere bei der Herstellung von Elektroden für Bleiakkumulatoren kann mit einer basischen Masse der Dichte 3 bis 5,7 g/ml gearbeitet werden. Die Paste kann hier entweder von Hand oder maschinell eingestrichen werden. Zur Verbesserung der Masseverteilung ist die Verwendung von Ultraschall zur zwischenzeitlichen Verflüssigung der Masse möglich.

Insbesondere bei dichten Netzwerken ist eine doppelseitige Pastierung von Vorteil, um eine vollständige Einhüllung aller Netzwerkteile zu erreichen. Desweiteren kann eine vollständige Umhüllung eines dichten Netzwerkes durch Verwendung von dünnflüssigeren Mischungen und anschließendem Abpressen mit einem saugfähigen Vliesmaterial, welches später in der fertigen Zelle als Säurereservoir verwendet wird, erfolgen.

Durch den erfindungsgemäßen Aufbau der Elektroden wird im wesentlichen erreicht, daß sie ein geringeres Gewicht, eine höhere Leistung und eine höhere mechanische Festigkeit aufweisen. Das geringere Gewicht gegenüber bekannten Ausführungen kommt dadurch zustande, daß der leitfähige Netzwerkstoff als Trägermaterial hauptsächlich aus synthetischen Fäden und Harzen, gegebenenfalls mit einer dünnen Schicht aus Metallen besteht. In der bevorzugten Ausführungsform ist das Fadenmaterial aus Polyester mit einem spezifischen Gewicht von ca. 1,4 g/cm³ auch das vorzugsweise zur Anwendung kommende Harz hat eine Dichte von ca. 1,4 g/cm³. Demgegenüber hat Blei ein spezifisches Gewicht von 11,3/cm³ und ein Bleigitter als Träger für die aktive Masse hat z.B. bei einer Starterbatterie ein Gewicht von 90 Gramm. Besteht der Träger für die aktive Masse aus dem oben beschriebenen Netzwerkstoff, so kann durch Gewichtseinsparung eine 88 Ah Starterbatterie um ein bis zwei Kilogramm leichter gebaut werden.

Bei einer Starterbatterie ist die Startleistung, d.h. die Hochstromentladefähigkeit der Batterie von entscheidender Bedeutung. Für diese Leistung ist der innere Widerstand der Batterie von ausschlaggebender Bedeutung, der wiederum von der Plattendicke abhängt, welche unter Verwendung von Netzwerkstoffen nicht mehr den gießtechnischen Beschränkungen eines bisher üblichen Gitters unterworfen ist. Da außerdem die aktive Masse von der filigranen Struktur des Netzwerkes skelettartig durchdrungen wird, liegt eine verbesserte Querstromverteilung und damit eine bessere Masseausnutzung vor.

Durch den verminderten Spannungsabfall in der Zelle nimmt auch die unerwünschte Verlustwärmeentwicklung ab. Dies wirkt sich günstig auf die Lebensdauer der Batterie aus.

Insgesamt bringt die Verwendung des leitfähigen Kunststoff-Netzwerkstoffes eine größere Energiedichte bezogen auf das Gewicht gegenüber herkömmlichen Bauarten von z.B. Blei/Säure-Ni/Cd- oder Ni/Fe-Zellen.

Gegenüber konventionellen Elektrodenplatten haben solche aus Netzwerkstoffen auch den Vorteil einer größeren mechanischen Stabilität. Aufgrund seiner Struktur trägt der Netzwerkstoff nicht nur die aktive Masse, sondern er durchdringt sie räumlich wie ein Skelett und armiert sie auf diese Weise und stabilisiert sie gegen Schlag- und Stoßbelastung. Dies wiederum vermindert die Gefahr, daß die aktive Masse vom Träger abfällt und sich als Schlamm auf dem Boden der Batterie ansammelt und die Leistung der Batterie vermindert oder sie unbrauchbar macht.

## Patentansprüche

1. Elektrode für galvanische Primär- und Sekundärelemente aus einem Träger und einer aktiven Masse, dadurch gekennzeichnet, daß der Träger ein elektrisch leitfähiger Netzwerkstoff (3) ist, der aus metallisierten Kunststoffäden besteht, und zur Bildung einer dreidimensionalen Struktur mit, vorzugsweise durch Tiefziehen erzeugten, über seine Fläche verteilten buckelartigen Vertiefungen und/oder Erhöhungen (5) versehen ist, in deren Bereich der Abstand zwischen den Kunststoffäden vergrößert ist, und der die aktive Masse skelettartig durchsetzt.

2. Elektrode gemäß Anspruch 1, dadurch gekennzeichnet, daß das Trägermaterial aus einer verformten Textilfläche besteht, die eine offene Netzwerkstruktur bildet, wobei die Netzwerkstruktur mit einem Thermo- oder Duroplasten formstabilisiert und elektrisch leitend ist.

3. Elektrode, insbesondere Negativelektrode für Akkumulatoren, vorzugsweise Bleiakkumulatoren, bestehend aus einer Gitterplatte, die als Träger für die aktive Masse und zur Stromzu- und -abführung dient, nach Anspruch 1, dadurch gekennzeichnet, daß die Gitterplatte als Kunststoffnetzwerk ausgebildet, das aus vorzugsweise mit einer gut leitenden, dünnen Metallschicht, insbesondere aus Kupfer, überzogenen Kunststoffäden besteht und zur Bildung einer dreidimensionalen Struktur mit vorzugsweise durch Tiefziehen erzeugten, über ihre Flächen verteilten buckelartigen Vertiefungen und/oder Erhöhungen (5) versehen ist, in deren Bereich der Abstand zwischen den Kunststoffäden vergrößert ist und daß das Kunststoffnetzwerk mit wenigstens einer weiteren Beschichtung aus einer Blei-Zinnlegierung oder aus Blei überzogen ist.

4. Elektrode nach Anspruch 3, dadurch gekennzeichnet, daß die weitere Beschichtung aus einer Blei-Zinnlegierung mit vorzugsweise 20 bis 90 % Blei, insbesondere etwa 80 bis 90 % Blei (Rest Zinn) besteht, die vorzugsweise eine Dicke von 5 bis 20 µm aufweist.

5. Elektrode nach Anspruch 3, dadurch gekennzeichnet, daß auf die gut leitende Metallschicht eine Bleischicht mit einer Dicke von vorzugsweise 30 bis 70, insbesondere 40 bis 60 bevorzugt etwa 50 µm aufgebracht ist.

6. Elektrode nach einem der vorhergehenden Ansprüche, dadurch gekennzeichnet, daß die weitere Beschichtung durch Eintauchen in ein Schmelzbad des Überzugsmetalls aufgebracht ist.

7. Elektrode nach Anspruch 6, dadurch gekennzeichnet, daß die Eintauchzeiten, während der das Netzwerk sich im Schmelzbad befindet, so kurz sind, daß der Schmelzpunkt des Kunststoffmaterials, aus dem das Kunststoffnetzwerk besteht, nicht überschritten wird.

8. Elektrode nach Anspruch 7, dadurch gekennzeichnet, daß die Temperatur des Schmelzbades 500 bis 600°K und die Eintauchzeit 1 bis 4, insbesondere 1 bis 2 sec. beträgt.

9. Elektrode nach einem der vorhergehenden Ansprüche, dadurch gekennzeichnet, daß alle Metallisierungen des Kunststoffnetzwerkes nach dem vozugsweise durch Tiefziehen erfolgenden Formgebunsprozess durchgeführt werden.

## Claims

1. An electrode for primary or secondary electric cells comprising a support and an active material, wherein the support is an electrically conductive network material (3) which consists of metallised plastics yarns and, to form a three-dimensional structure, is provided with humplike depressions and/or elevations (5) distributed over its area and preferably produced by deep-drawing and in whose area the distance between the plastics filaments is increased, and which intersperses the active material skeletally.

2. The electrode as claimed in claim 1, wherein the support material comprises a deformed textile sheet material which forms an open network structure which is dimensionally stabilized by a thermoplastic or thermoset resin and is electrically conducting.

3. The electrode as claimed in claim 1, in particular a negative electrode for secondary batteries, preferably lead batteries, consisting of a grid plate which acts as support for the active material and conducts current to and from the active material, wherein the grid plate is constructed as a plastics network which preferably consists of plastics filaments coated with an efficiently conducting, thin coat of metal, in particular copper, and, to form a three-dimensional structure, is provided with humplike depressions and/or elevations (5) distributed over its areas and preferably produced by deep-drawing and in whose area the distance between the plastics filaments is increased, and wherein the plastics network has been coated with at least one further coating of a lead-tin alloy or of lead.

4. The electrode as claimed in claim 3, wherein the further coating is a lead-tin alloy which is preferably 20-90% lead, in particular about 80-90% lead (remainder tin), and preferably has a thickness of from 5 to 20 µm.

5. The electrode as claimed in claim 3, wherein the efficiently conducting coat of metal has had applied to it a coat of lead in a thickness of preferably 30-70, in particular 40-60, preferably about 50, µm.

6. The electrode as claimed in any one of the preceding claims, wherein the further coating has been applied by dipping into a melt of the coating metal.

7. The electrode as claimed in claim 6, wherein the dip times during which the network is in the melt are so short that the melting point of the plastics material making up the plastics network is not exceeded.

8. The electrode as claimed in claim 7, wherein the temperature of the melt is from 500 to 600°K and the dip time is from 1 to 4, in particular from 1 to 2, sec.

9. The electrode as claimed in any one of the preceding claims, wherein all the metallizations of the plastics network are carried out following the shape-conferring, preferably deep-drawing, process.

## Revendications

1. Electrode pour éléments galvaniques primaires et secondaires, se composant d'un support et d'une masse active, caractérisée en ce que le support a la forme d'un réseau (3) conducteur électrique qui se compose de fils plastiques métallisés, et qui est pourvu d'encoches et/ou de saillies (5) sous forme de bossage, réparties sur sa surface et obtenues de préférence par emboutissage, pour la réalisation d'une structure tridimensionnelle, l'écartement entre les fils plastiques étant plus grand dans la zone des encoches et des saillies, le réseau constituant une structure traversant la masse active.

2. Electrode selon la revendication 1, caractérisée en ce que le matériau support se compose d'une surface textile façonnée qui forme une structure ouverte de réseau, cette dernière étant conductrice électrique et étant stabilisée en forme par l'intermédiaire d'une matière thermoplastique ou d'une résine thermodurcissable.

3. Electrode, en particulier électrode négative pour accumulateurs, en particulier accumulateurs au plomb, composée d'une plaque en forme de grille servant comme support pour la masse active ainsi que pour faire arriver et partir le courant, électrode selon la revendication 1, caractérisée en ce que la plaque en forme de grille est construite comme un réseau en matière plastique qui se compose de fils plastiques recouverts de préférence au moyen d'une couche métallique mince et bonne conductrice, en particulier en cuivre, et qui est pourvue d'encoches et/ou de saillies (5) sous forme de bossages, réparties sur sa surface et obtenues de préférence par emboutissage pour la réalisation d'une structure tridimensionnelle, l'écartement entre les fils plastiques étant plus grand dans la zone des encoches et des saillies, le réseau plastique étant récouvert au moyen d'au moins une autre couche en plomb ou en plomb-étain.

4. Electrode selon la revendication 3, caractérisée en ce que la couche supplémentaire se compose d'un dépôt plomb-étain comprenant de préférence 20 à 90 % de plomb, en particulier entre environ 80 et 90 % de plomb (le reste étant de l'étain), qui présente de préférence une épaisseur de 5 à 20 µm.

5. Electrode selon la revendication 3, caractérisée en ce que sur la couche métallique bonne conductrice est rapportée une couche de plomb dont l'épaisseur est de préférence de 30 à 70, en particulier de 40 à 60 et préférentiellement autour de 50 µm.

6. Electrode selon l'une des revendications précédentes, caractérisée en ce que la couche supplémentaire est rapportée par barbotage dans un bain de fusion du métal déposé.

7. Electrode selon la revendication 6, caractérisée en ce que le temps de barbotage durant lequel le réseau se trouve dans le bain de fusion, est suffisamment court pour que le point de fusion du matériau plastique composant le réseau plastique, ne soit pas atteint.

8. Electrode selon la revendication 7, caractérisée en ce que la température du bain de fusion est comprise entre 500 et 600°K, et en ce que le temps de barbotage se situe entre 1 et 4, de préférence 1 et 2 secondes.

9. Electrode selon l'une des revendications précédentes, caractérisée en ce que l'on réalise tous les procédés de métallisation du réseau plastique après le processus de façonnage réalisé de préférence par emboutissage.
